# EUROPEAN PATENT APPLICATION

(11) **EP 4 484 002 A1**
(43) Date of publication of application: **01.01.2025**
(21) Application number: 23182907.8
(22) Date of filing: 30.06.2023
(51) Int. Cl.: B01J 21/04, B01J 23/28, B01J 27/22, B01J 35/00, B01J 35/02, B01J 35/06, B01J 35/10, B01J 37/00, B01J 37/02, B01J 37/04, B01J 37/08

(54) **METHOD OF PRODUCING A CATALYST STRUCTURE COMPRISING MOLYBDENUM CARBIDE, AND CATALYST STRUCTURE COMPRISING MOLYBDENUM CARBIDE**

(71) Applicant: VITO NV, 2400 Mol (BE)
(72) Inventor: PAJARES, Arturo, 2400 Mol (BE); VANGENEUGDEN, Dirk, 2400 Mol (BE)
(74) Representative: AWA Benelux

(57) **Abstract**

The present invention relates to a method of producing a catalyst structure comprising molybdenum carbide on a porous carrier compound, comprising preparing a mixture comprising a porous carrier compound and a molybdenum oxide; carburizing the mixture by exposing the mixture to a reducing atmosphere comprising a carbon-comprising gas at a temperature between 650 °C and 1000 °C, thereby converting at least a portion of the molybdenum oxide into molybdenum carbides and obtaining a catalyst structure having an elevated temperature; cooling the catalyst structure having an elevated temperature to room temperature in an inert atmosphere, thereby obtaining the catalyst structure; wherein the concentration of molybdenum oxide in the mixture is such that a ratio of the molybdenum content in the mixture to the BET surface area of the porous carrier compound in the mixture is equal to or lower than 2.5 * 10⁻⁵ mol_{Mo}/m², wherein the molybdenum content in the mixture is measured by ICP-OES and the BET surface area is measured by multi-point BET analysis of a N₂ adsorption isotherm, such that the carburization temperature and the concentration of molybdenum oxide in the mixture are such that the molybdenum carbide comprises cubic δ-MoC and/or hexagonal η-Mo₃C₂, as identified by means of the powder diffraction database of the International Center for Diffraction Data (ICDD). The invention further relates to a catalyst structure obtained by the methods of the invention.

## Description

### Technical field

The present invention is related to a method of producing a catalyst structure comprising molybdenum carbide on a porous carrier compound. The present invention is further related to a catalyst structure comprising molybdenum carbide on a porous carrier compound.

### Background art

Over the past decades, CO₂ utilization has received renewed attention due to the CO₂ emissions rising. Converting CO₂ from detrimental greenhouse gas into value-added chemicals and fuels provides an alternative to the transition to a low carbon economy. However, the activation of CO₂ and its hydrogenation to alcohols and hydrocarbons are challenging tasks because CO₂ is a thermodynamically stable and chemically inert molecule. A possible solution is reducing CO₂ into CO first, for example via the Reverse Water Gas Shift (RWGS) reaction. The produced CO can then be used as feedstock to produce several chemical compounds.

The conversion of CO₂ into CO is advantageously performed in the presence of a catalyst. Traditional catalysts include noble metal-based catalysts.

Recently, transition metal carbides (TMCs) have been investigated as alternative to the conventional noble metal-based catalysts because of their similar catalytic properties. Several TMCs have been found that can activate CO₂ and split H₂, making them a feasible catalyst for the reduction of CO₂. In particular, molybdenum carbide shows a better catalytic performance compared to other TMCs, with MoC and Mo₂C being the most studied.

US 6,207,609 discloses a method of producing Mo₂C as powder by reacting ammonium molybdate with hydrogen and carbon monoxide at a temperature higher than 300 °C and lower than 850 °C, thereby reducing the ammonium molybdate (decomposing it into molybdenum oxides), and then directly carburizing the molybdenum oxides to Mo₂C.

US2021/0322960 discloses a one-step method for synthesizing a supported transition metal carbide catalyst. A mixture comprising a support such as Al₂O₃, a transition metal precursor and a solid carbon source is first calcined in a reducing atmosphere at a temperature between 200 °C and 500 °C, followed by carburization in a reducing atmosphere at a temperature between 700 °C and 900 °C, and cooling in a protective atmosphere and passivation. When the transition metal is molybdenum, the carbide is present as Mo₂C.

The catalytically active phases of the foregoing methods are mainly present in the form of Mo₂C with a relatively large crystal size (>10 nm). A disadvantage of the foregoing methods is that it is difficult to control the phase of the molybdenum carbide formed and the size of the crystals, and thus of the catalyst structure obtained.

### Summary of the invention

The present invention aims to overcome one or more of the above drawbacks. It is an aim of the invention to provide a method of producing a catalyst structure comprising molybdenum carbide with an improved catalytic activity, in particular for the conversion of CO₂ to CO.

Another aim of the present invention is to provide a catalyst structure comprising molybdenum carbide having excellent catalytic activity, in particular for the conversion of CO₂ to CO. It is a further aim to provide a catalyst structure having a high mechanical stability, both for its structural and textural properties, thereby providing catalyst structures which are catalytically active for prolonged periods of time.

According to a first aspect of the invention, there is provided a method of producing a catalyst structure comprising molybdenum carbide on a porous carrier compound as set out in the appended claims.

The method advantageously comprises preparing a mixture comprising a porous carrier compound and a molybdenum oxide.

Advantageously, the molybdenum oxide comprises or substantially consists of MoO₂, MoO₃, or a combination thereof. Advantageously, the molybdenum oxide comprises or substantially consists of MoO₃.

Advantageously, the porous carrier compound comprises or substantially consists of a metal oxide, a doped metal oxide, a silicate, alumina, silica, or combinations of two or more thereof.

Advantageously, the concentration of molybdenum oxide in the mixture is such that a ratio of the molybdenum content in the mixture to the BET surface area of the porous carrier compound in the mixture is equal to or lower than 2.5 * 10⁻⁵ mol_{Mo}/m². Advantageously, the ratio of the molybdenum content in the mixture to the BET surface area of the porous carrier compound in the mixture is between 5 * 10⁻⁸ mol_{Mo}/m² and 2.5 * 10⁻⁵ mol_{Mo}/m², for example between 1 * 10⁻⁷ mol_{Mo}/m² and 2 * 10⁻⁵ mol_{Mo}/m², preferably between 5 * 10⁻⁷ mol_{Mo}/m² and 1.5 * 10⁻⁵ mol_{Mo}/m², such as between 1 * 10⁻⁶ mol_{Mo}/m² and 1 * 10⁻⁵ mol_{Mo}/m², more preferably between 2.5 * 10⁻⁶ mol_{Mo}/m² and 1 * 10⁻⁵ mol_{Mo}/m². The molybdenum content in the mixture is advantageously measured by inductively coupled plasma optical emission spectroscopy (ICP-OES). The BET surface area of the porous carrier compound is advantageously measured by multi-point BET analysis of a N₂ adsorption isotherm.

The method comprises carburizing the mixture comprising the porous carrier compound and molybdenum oxide by exposing the mixture to a reducing atmosphere at an elevated temperature. The reducing atmosphere comprises a carbon-comprising gas.

Carburizing the mixture is performed at a temperature between 650 °C and 1000 °C. Advantageously, carburizing the mixture is performed at a temperature between 675 °C and 950 °C, preferably between 700 °C and 900 °C.

Upon carburization, at least a portion of the molybdenum oxide is converted into molybdenum carbide, thereby obtaining a catalyst structure having an elevated temperature.

The method further comprises cooling the catalyst structure having an elevated temperature in an inert atmosphere, thereby obtaining the catalyst structure. By cooling in an inert atmosphere, oxidation of the molybdenum carbides and damage to the catalyst structure are advantageously avoided. Advantageously, no structural changes to the catalyst structure take place. In particular, and advantageously, no changes to the molybdenum carbides formed during the carburization take place.

Advantageously, in the light of the present disclosure, the term "inert atmosphere" is used for an atmosphere which is inert with respect to molybdenum oxide, in particular an atmosphere which substantially consists or inert gases, i.e. which comprises at least 98 vol.% of one or more inert gases, preferably at least 99 vol.% inert gases, more preferably at least 99.5 vol.% inert gases. Advantageously, the inert atmosphere comprises or substantially consists of helium, argon and/or nitrogen.

The temperature of carburizing the mixture, i.e. the carburization temperature, and the concentration of molybdenum oxide in the mixture are such that the molybdenum carbide, i.e. the molybdenum carbide as contained in the catalyst structure, comprises or substantially consists of cubic δ-MoC and/or hexagonal η-Mo₃C₂, as identified by means of the powder diffraction database of the International Center for Diffraction Data (ICDD).

In the light of the present disclosure, the term "cubic δ-MoC" is used for the fcc-MoC phase.

In the light of the present disclosure, the term "hexagonal η-Mo₃C₂" is used for the hcp-Mo₃C₂ phase.

In the light of the present disclosure, the term "α/β-Mo₂C" is used for both α-Mo₂C and β-Mo₂C, which correspond to the Mo₂C phases. It is generally known that it is difficult to discern between the X-Ray diffraction (XRD) spectrum of orthorhombic α-Mo₂C and that of hexagonal β-Mo₂C due to an overlapping of the most intense XRD peaks positions corresponding to both Mo₂C phases. It is therefore known to use the term "α/β-Mo₂C".

Advantageously, the carbon-comprising gas comprises or substantially consists of one or a combination of a C₁-C₄ alkane and/or CO. Preferably, the carbon-comprising gas comprises or substantially consists of methane.

Advantageously, the reducing atmosphere further comprises hydrogen. Advantageously, the molar ratio of the carbon-comprising gas and hydrogen is between 100:1 and 1:100, for example between 75:1 and 1:75, between 50:1 and 1:50, between 20:1 and 1:20, preferably between 10:1 and 1:10, more preferably between 1:5 and 5:1, such as between 1:4 and 4:1.

Advantageously, at least 20 % of the molybdenum oxide is converted into molybdenum carbide, such as at least 30 %, at least 40 %, preferably at least 50 %, more preferably at least 70 %, most preferably at least 90 %, for example at least 95 %, at least 98 %, or at least 99 %.

Advantageously, the molybdenum carbide in the catalyst structure obtained by methods of the invention comprises at least 30 % by weight, such as at least 40 % by weight, preferably at least 50 % by weight, more preferably at least 70 % by weight, most preferably at least 90 % by weight of cubic δ-MoC and/or hexagonal η-Mo₃C₂, based in the total weight of molybdenum carbide in the catalyst structure.

Advantageously, method further comprises impregnating a porous carrier compound with a precursor of the molybdenum oxide.

Advantageously, the method further comprises drying the impregnated porous carrier compound.

Advantageously, the method further comprises calcining the dried impregnated porous carrier compound. Advantageously, calcining the precursor of molybdenum oxide converts the precursor into the molybdenum oxide, thereby obtaining the mixture.

Advantageously, the precursor of the molybdenum oxide comprises or substantially consists of one or a combination of: (NH₄)₆Mo₇O₂₄.nH₂O wherein n is between 0 and 4, X₂MoO₄ wherein X is potassium or sodium, molybdenum chloride, a molybdenum alkoxide such as for instance molybdenum ethoxide, or a molybdenum oxalate.

Advantageously, the methods of the invention further comprise shaping the mixture into a porous green body prior to carburizing the mixture. Advantageously, when the method comprises shaping the mixture into a porous green body, carburizing the mixture comprises carburizing the porous green body.

Advantageously, shaping the mixture comprises arranging the mixture as filaments in a plurality of stacked layers to obtain the porous green body, wherein at least some of the filaments within at least one of the plurality of layers are spaced apart from one another.

Advantageously, the porous green body is built by a 3D-printing technique. An example of a suitable 3D-printing technique is Direct Ink Writing or micro-extrusion.

According to a second aspect of the invention, there is provided a catalyst structure comprising a porous carrier compound as set out in the appended claims. Advantageously, the porous carrier compound is as described hereinabove.

The catalyst structure further comprises a molybdenum carbide. At least a portion of the molybdenum carbide is present as crystals on the porous carrier compound, for example at least 50 %, for example at least 75 %, preferably at least 90 %, such as at least 95 %, more preferably at least 98 %, at least 99 %, or at least 99.5 % of the molybdenum carbide is present as crystals. Advantageously, substantially all molybdenum carbide is present as crystals on the porous carrier compound. The crystals have an average size of at most 10 nm, preferably at most 9 nm, for example at most 8 nm, more preferably at most 7.5 nm, such as at most 7 nm, at most 6 nm, most preferably at most 5 nm. The average crystal size is measured by Transmission Electron Microscopy (TEM).

Alternatively, the average crystal size can be measured by X-Ray diffraction (XRD). However, it is known in the art that XRD can be used to measure the average crystal size only for structures comprising at least 2 % by weight of the material or compound the crystals are made of, based on the total weight of the structure. In other words, in the present disclosure, the average crystal size can be measured with XRD for catalyst structures comprising at least 2 % by weight of molybdenum carbide, based on the total weight of the catalyst structure.

The molybdenum carbide comprises or substantially consists of cubic δ-MoC and/or hexagonal η-Mo₃C₂, as identified by means of the powder diffraction database of the ICDD.

Advantageously, the molybdenum carbide comprises at least 30 % by weight, such as at least 40 % by weight, preferably at least 50 % by weight, more preferably at least 70 % by weight, most preferably at least 90 % by weight of cubic δ-MoC and/or hexagonal η-Mo₃C₂, based on the total weight of molybdenum carbide.

Advantageously, the catalyst structure is obtained or produced according to a method according to the first aspect of the invention. Advantageously, the catalyst structure is obtained from a mixture comprising a molybdenum oxide, wherein the concentration of molybdenum oxide in the mixture is such that a ratio of the molybdenum content in the mixture to the BET surface area of the porous carrier compound in the mixture is equal to or lower than 2.5 * 10⁻⁵ mol_{Mo}/m², wherein the molybdenum content and the BET surface area of the porous carrier compound are measured as described hereinabove.

Advantageously, the ratio of the molybdenum content in the mixture to the BET surface area of the porous carrier compound in the mixture is between 5 * 10⁻⁸ mol_{Mo}/m² and 2.5 * 10⁻⁵ mol_{Mo}/m², for example between 1 * 10⁻⁷ mol_{Mo}/m² and 2 * 10⁻⁵ mol_{Mo}/m², preferably between 5 * 10⁻⁷ mol_{Mo}/m² and 1.5 * 10⁻⁵ mol_{Mo}/m², such as between 1 * 10⁻⁶ mol_{Mo}/m² and 1 * 10⁻⁵ mol_{Mo}/m², more preferably between 2.5 * 10⁻⁶ mol_{Mo}/m² and 1 * 10⁻⁵ mol_{Mo}/m².

Advantages of the methods of the present disclosure, in particular of the carburizing atmosphere and temperature and the composition of the mixture that is carburized, include, without being limited thereto, the production of catalyst structures comprising molybdenum carbide present as cubic δ-MoC and/or hexagonal η-Mo₃C₂. Compared to the molybdenum carbide Mo₂C of the catalyst structures known in the art, the presence of cubic δ-MoC and/or hexagonal η-Mo₃C₂ in the catalyst structures have the following advantages, without being limited thereto:
- a high catalytic activity, in particular for the conversion of CO₂ to CO,
- catalytically activity for an extended period of time, thereby increasing the lifetime of the catalyst structures,
- a high mechanically stability, and
- a minimal risk to leaching of the molybdenum from the catalyst structure in a broad range of reaction conditions.

A further advantage of the methods and catalyst structures of the invention is that a sufficient catalytic effect is obtained even when small amounts of molybdenum are used in the mixture that is carburized. Consequently, given the price of molybdenum, the catalyst structures of the present disclosure are cost effective when compared to existing molybdenum carbide based catalyst structures.

### Brief description of the figures

Aspects of the invention will now be described in more detail with reference to the appended drawings, wherein same reference numerals illustrate same features and wherein:
Figure 1 schematically represents a method according to the invention.
Figure 2 shows 5 catalyst structures, obtained by methods of the invention, and the carburized porous carrier compound.
Figure 3 shows a SEM image of a catalyst structure comprising molybdenum carbide crystals, obtained by a method of the invention.
Figure 4 shows the X-ray diffraction (XRD) patterns for 5 catalyst structures of the invention and the carburized porous carrier compound.
Figures 5A to 5E show STEM images and EDX spectra of 5 catalyst structures obtained by methods of the invention.
Figure 6 shows the CO₂ conversion in the RWGS reaction for 5 catalyst structures of the invention and the carburized porous carrier compound.
Figure 7 shows the CO selectivity in the RWGS reaction for 5 catalyst structures of the invention and the carburized porous carrier compound.
Figures 8A and 8B show the CO production in the RWGS reaction for 5 catalyst structures of the invention and the carburized porous carrier compound.
Figure 9 shows the long term CO₂ conversion, CO selectivity and CO production in the RWGS reaction for a catalyst structure of the invention.
Figure 10 shows the CO₂ conversion in the RWGS reaction for different reaction mixtures, for a catalyst structure of the invention.

### Description of embodiments

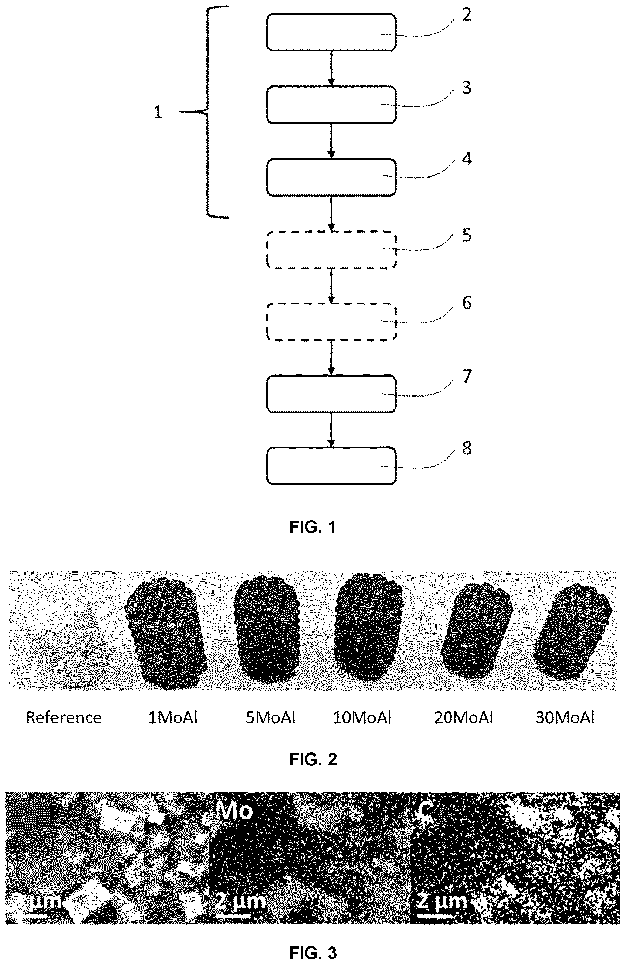

Fig. 1 shows a method according to the present disclosure of producing a catalyst structure comprising molybdenum carbide on a porous carrier compound.

In a first group of optional operations 1 a mixture is prepared which comprises a porous carrier compound and a molybdenum oxide. In operation 7, the mixture is carburized into a catalyst structure, and in operation 8, the carburized catalyst structure is cooled.

Advantageously, the porous carrier compound comprises or substantially consists of a metal oxide, a doped metal oxide, a silicate, alumina (Al₂O₃), silica (SiO₂), or combinations of two or more thereof. Non-limiting examples of metal oxides include TiO₂, ZrO₂, CeO₂ and MgO. Non-limiting examples of doped metal oxides include metal oxides doped with yttrium, cesium, zirconium, or a combination of two or more thereof. Non-limiting examples of silicates include cordierite, aluminosilicate, magnesium silicate, and magnesium-aluminosilicate. Preferably, the porous carrier compound comprises or substantially consists of alumina.

Alternatively or additionally, and advantageously, the porous carrier compound comprises or substantially consists of carbon, such as activated carbon or graphite.

Advantageously, the molybdenum oxide comprises or substantially consists of MoO₃ and/or MoO₂.

One example of preparing 1 the mixture comprises a first operation 2 of impregnating the porous carrier compound with a precursor of the molybdenum oxide, preferably a precursor of MoO₃ and/or MoO₂. Advantageously, the precursor of the molybdenum oxide comprises or substantially consists of one or a combination of (NH₄)₆Mo₇O₂₄.nH₂O, wherein n is between 0 and 4, preferably (NH₄)₆Mo₇O₂₄.4H₂O (i.e. n is 4).

The porous carrier compound can be impregnated with the precursor of molybdenum oxide by methods known in the art. Examples of suitable impregnation methods include wet impregnation, such as wet impregnation in a rotary evaporator.

In a second operation 3 of the exemplary optional preparation 1 of the mixture, the impregnated porous carrier compound is dried. The impregnated porous carrier compound can be dried by methods known in the art. Examples of suitable drying methods include one or a combination of heating, e.g. to a temperature between room temperature (25 °C) and 250 °C, more preferably between 30 °C and 120 °C, and exposing the impregnated porous carrier compound to an atmosphere at a reduced pressure, e.g. an atmosphere at a pressure below atmospheric pressure, such as 975 mbar or less, 950 mbar or less, 900 mbar or less, 850 mbar or less. It will be understood that the optimal drying conditions, such as temperature and/or pressure of the surrounding atmosphere, depend on the composition of the porous carrier compound and the precursor used in operation 2.

In a third operation 4 of the exemplary optional preparation 1 of the mixture, the dried impregnated porous carrier compound is calcined, thereby obtaining the mixture comprising a porous carrier compound and a molybdenum oxide. The dried impregnated porous carrier compound can be calcined by methods known in the art. An example of a suitable calcination method includes passing the dried impregnated porous carrier compound through a calcination furnace.

Advantageously, operation 4 is carried out at a temperature between 100 °C and 500 °C, preferably between 200 °C and 450 °C, more preferably between 250 °C and 400 °C, such as between 300 °C and 350 °C.

Advantageously, the dried impregnated porous carrier compound is calcined by exposing the dried impregnated porous carrier compound to an atmosphere comprising at least 5 vol.% of oxygen, preferably at least 10 vol. of oxygen, such as air.

Optionally, the method can comprise an operation 6 of shaping the mixture comprising a porous carrier compound and a molybdenum oxide into a porous green body prior to operation 7. It will be understood that when the mixture is shaped into a porous green body, it is the porous green body that is carburized.

Non-limiting examples of shaping methods include 3D-printing, extrusion, pelletizing, cold pressing and hot pressing of the mixture, granulation, wash coating, spray coating or any other shaping technology. Preferred examples of 3D-printing techniques include micro-extrusion, also known as Direct Ink Writing (DIW).

During operation 7, the mixture or, when the mixture is shaped, the porous green body, is carburized in a reducing atmosphere comprising a carbon-comprising gas. Advantageously, the carbon-comprising gas comprises one or a combination of a C₁-C₄ alkane and/or CO, preferably wherein the carbon-comprising gas comprises methane and/or ethane.

Advantageously, the reducing atmosphere further comprises hydrogen and an inert gas. Advantageously, as the inert gas comprises or substantially consists of one or a combination of helium, argon or nitrogen.

Upon adding an inert gas to the reducing atmosphere, the carburization reaction can be better controlled, which leads to catalyst structures having a more robust mechanical structure, and advantageously having a reduced number of defects, such as cracks.

Advantageously, the reducing atmosphere comprises the carbon-comprising gas, hydrogen and the inert gas in a molar ratio between 100:1:100 and 1:100:100, preferably between 50:1:50 and 1:50:50, such as between 20:1:20 and 1:20:20, between 10:1:10 and 1:10:10, more preferably between 5:1:5 and 1:5:5, such as between 4:1:5 and 1:4:5.

Advantageously, operation 7 is performed for a duration between 5 minutes and 24 hours, such as between 10 minutes and 20 hours, between 20 minutes and 15 hours, preferably between 30 minutes and 10 hours, more preferably between 1 hour and 8 hours, such as between 2 hours and 6 hours.

Advantageously, the mixture or, when the mixture is shaped, the porous green body, is heated to the temperature for carburization at a heating rate between 0.5 °C/min and 20 °C/min, preferably between 1 °C/min and 15 °C/min, for example between 1.5 °C/min and 10 °C/min, more preferably between 2 °C/min and 8 °C/min, such as between 2.5 °C/min and 5 °C/min. It is to be understood that the optimal heating rate depends on the composition of the mixture, and when shaping is carried out, on the shape of the porous green body.

Advantageously, in operation 8, the catalyst structure is cooled to a temperature of 250 °C or less, preferably 200 °C or less, preferably 150°C or less, preferably 100°C or less, preferably 50°C or less, in an inert atmosphere. In particular, the catalyst structure is cooled to room temperature. Advantageously, operation 8 is performed at a cooling rate between 0.5 °C/min and 20 °C/min, preferably between 1 °C/min and 15 °C/min, for example between 1.5 °C/min and 10 °C/min, more preferably between 2 °C/min and 8 °C/min, such as between 2.5 °C/min and 5 °C/min. It is to be understood that the optimal cooling rate depends on the shape and composition of the catalyst structure.

Optionally, the mixture comprising a porous carrier compound and a molybdenum oxide further comprises a binder. Non-limiting examples of binders include organic binders, for example methylcellulose, and inorganic binders such as AIOOH.

Advantageously, when the mixture comprises a binder, the mixture comprises between 5 % by weight and 30 % by weight, preferably between 10 % by weight and 20 % by weight, of the binder, based on the total weight of the mixture.

Whether a binder is used or not depends, amongst others, on the processing steps of the method. More particularly, the optional use of a binder depends on whether the mixture is shaped prior to carburization or not, and if so, the type or characteristics of the shaping method. Advantageously, when the method comprises shaping via 3D-printing of the mixture, the mixture comprises a binder.

Optionally, the mixture further comprises a dispersant. Advantageously, the optional dispersant allows to reduce, and even avoid, agglomeration of the porous carrier compound. Agglomeration of the porous carrier compound is known to reduce the porosity of the carrier compound. Advantageously, whether a dispersant is used or not depends, amongst others, on the composition of the porous carrier compound. If a dispersant is used, its composition is thus selected based on, amongst others, the composition of the porous carrier compound. Non-limiting examples of dispersants include ammonium polymethacrylate, and styrene maleic anhydride copolymers. Optionally, the dispersant is in the form of an aqueous solution.

Advantageously, when the mixture comprises a dispersant, the weight ratio of the dispersant to the porous carrier compound is between 0.001 and 0.01, preferably between 0.002 and 0.008, more preferably between 0.003 and 0.006, such as between 0.004 and 0.005.

Whether a dispersant is used or not depends, amongst others, on the processing steps of the method. More particularly, the optional use of a dispersant depends on whether the mixture is shaped prior to carburization or not, and if so, the type or characteristics of the shaping method. Advantageously, when the method comprises shaping via 3D-printing of the mixture, the mixture comprises a dispersant.

When the mixture comprises a binder and/or a dispersant, the method advantageously comprises an operation 5 of adding the binder and/or the dispersant to the mixture. Advantageously, operation 5 is carried out prior to operation 7, or operation 6, of performed.

The inventors have surprisingly found that with the methods of the invention molybdenum carbide comprising cubic δ-MoC and/or hexagonal η-Mo₃C₂ is formed, contrary to the α/β-Mo₂C which was expected. It was further surprisingly found that the catalyst structures comprising cubic δ-MoC and/or hexagonal η-Mo₃C₂ showed a higher catalytic activity than catalyst structures comprising α/β-Mo₂C.

The inventors have further discovered that by using the methods of the invention, the average crystal size of the molybdenum carbides is at most 10 nm, whereas α/β-Mo₂C is typically present as larger crystals, having sizes of more than 10 nm, such as at least 11.5 nm or more.

The inventors believe that it is the combination of on one hand the ratio of the molybdenum content to the BET surface area of the porous carrier material being equal to or lower than 2.5 * 10⁻⁵ mol_{Mo}/m², and on the other hand the carburization atmosphere and temperature that allow to obtain these surprising results.

The present disclosure is further related to a method for the reduction of CO₂. The CO₂ reduction method advantageously comprises producing a catalyst structure according to the methods of producing a catalyst structure as described hereinabove, and carrying out a reduction reaction of CO₂, wherein the catalyst structure is used as a catalyst.

The present disclosure is further related to the use of a catalyst structure of the present invention, or of a catalyst structure obtained by the methods of the present invention, for reducing CO₂. Advantageously, the catalyst structure is used as a catalyst to reduce CO₂.

Advantageously, reducing CO₂ comprises converting the CO₂ into CO by means of the Reverse Water Gas Shift reaction.

### Examples

### Example 1

5 samples were prepared using γ-Al₂O₃ as porous carrier compound. The mixtures varied in the ratio of molybdenum content in the mixture to the BET surface area of the γ-Al₂O₃. First, the γ-Al₂O₃ was impregnated with (NH₄)₆Mo₇O₂₄.4H₂O as precursor of MoO₃ and MoO₂ by means of a wet impregnation method in a rotary evaporator. After impregnation, the impregnated γ-Al₂O₃ was dried overnight and then calcined in an oven at 350 °C, thereby obtaining mixtures comprising MoO₃. Table 1 shows the ratio of the molybdenum content in the mixture to the BET surface area of the γ-Al₂O₃ for each mixture.

**Table 1: Ratio of molybdenum content to BET surface area porous carrier compound**

| **Mixture name** | **Ratio of Mo content/BET surface area (mol_{Mo}/m²)** |
|---|---|
| 1MoAl | 5.65 * 10⁻⁷ |
| 5MoAl | 3.02 * 10⁻⁶ |
| 10MoAl | 6.20 * 10⁻⁶ |
| 20MoAl | 1.31 * 10⁻⁵ |
| 30MoAl | 2.52 * 10⁻⁵ |

The mixtures were shaped by means to 3D-printing. To this end, a paste was prepared for each mixture by milling the mixtures and adding a 0.63 M HNO₃ aqueous solution comprising 3.5 % by weight of methylcellulose, based on the total weight of the aqueous solution. Further, AIOOH was added as binder in a weight ratio of AIOOH to the γ-Al₂O₃ of 0.25. The pastes were mixed several times at 2000 rpm using a planetary centrifugal mixer (ARE-250, Thinky Corp.), until a homogeneous paste was obtained. The pastes were then kept at 0 °C until the required viscosity for 3D-printing was achieved, which implied a duration between 12 h and 48 h for all pastes.

3D-printing was performed by means of a 3D-clay printer (Lutum 4.2, Vormvrij), using a printing nozzle of 840 µm and compressed air at 1-5 bar. Porous green bodies were obtained from all 5 pastes. The porous green bodies were dried at room temperature for 3 days. No deformation of the porous green bodies was noticed during and after drying.

As a reference sample, a paste comprising only γ-Al₂O₃ (hence only the porous carrier compound) was prepared and 3D-printed in the same way. This reference porous green body was dried at 550 °C for 3 hours in air.

All porous green bodies - 5 comprising Mo and 1 without Mo - were placed in a tubular furnace for carburization. The green bodies were heated to a carburization temperature of 800 °C at 2.5 °C/min, and were carburized for 4 hours once 800 °C was reached. The carburization was performed in an atmosphere comprising methane (CH₄), hydrogen (H₂) and helium (He) in a molar ratio of CH₄/H₂/He of 1/4/5. The samples hereby obtained were then cooled to room temperature under helium atmosphere. Fig. 2 shows the obtained samples. It was noticed that a higher content of molybdenum lead to less darker samples.

Fig. 3 shows a scanning electron microscopy (SEM) image of the 10MoAI sample. It is clear that the molybdenum carbide is present on the γ-Al₂O₃ as crystals. SEM analysis was performed by means of a FEI Nova NanoSEM 450 operating at an accelerating voltage up to 20 keV.

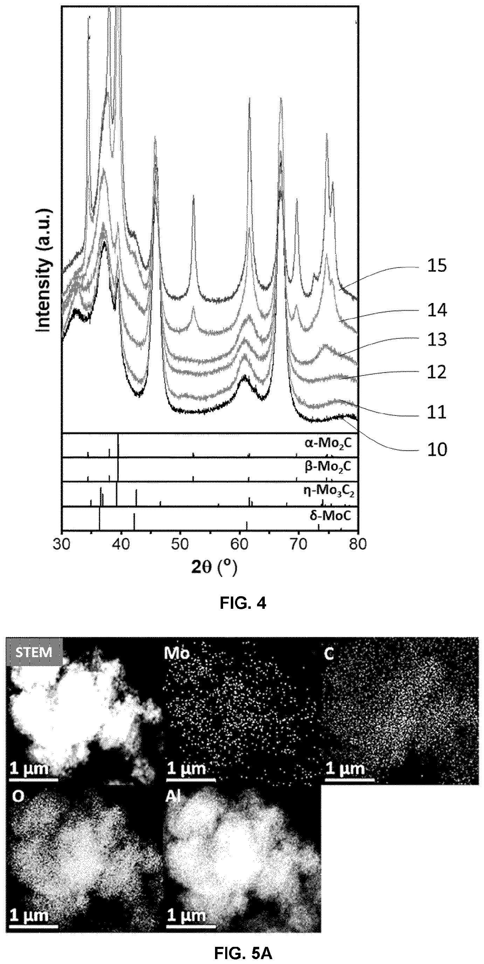

Fig. 4 shows the X-ray diffraction (XRD) patterns for all samples, wherein the reference sample 10 (i.e. the paste comprising only γ-Al₂O₃ as the porous carrier compound) is plotted for comparison. To perform the XRD, the samples were crushed and milled, and the obtained powder was analysed by means of powder X-ray diffraction, performed at room temperature in the 2θ range of 4° to 100° with a step of 0.04° and counting 4 seconds at each step (PANalytical X'Pert PRO MPD diffractometer with a graphite monochromator and Cu Kα source at 40 kV and 40 mA). Phase identification of the XRD patterns was carried out by means of the ICDD Powder Diffraction database.

For sample 11, obtained from the mixture 1MoAl, and sample 12, obtained from the mixture 5MoAl, the presence of a shoulder at lower angles in the peak at 2θ = 77.8° indicates the presence of cubic δ-MoC. For sample 13, obtained from the mixture 10MoAI, the appearance of a broad peak at 2θ = 41°-44° and 72°-77° indicates the presence of cubic δ-MoC and hexagonal η-Mo₃C₂. For sample 14, obtained from the mixture 20MoAI, the XRD pattern indicates the co-existence of cubic δ-MoC, hexagonal η-Mo₃C₂ and a minor amount of α/β-Mo₂C. For sample 15, obtained from the mixture 30MoAI, the XRD pattern indicates the co-existence of small amounts of cubic δ-MoC and hexagonal η-Mo₃C₂ and a significant amount of α/β-Mo₂C.

Transmission Electron Microscopy (TEM) was performed by means of a JEOL J2010F microscope operated at an accelerating voltage up to 200 kV. The TEM analysis confirmed the phases of molybdenum carbide present in all samples.

The average crystal sizes of the cubic δ-MoC and hexagonal η-Mo₃C₂ were calculated from the TEM analysis. The results are summarized in Table 2. It is clear that the average crystal sizes of the cubic δ-MoC and hexagonal η-Mo₃C₂ increase with an increasing amount of molybdenum in the starting mixture.

The crystal size of the α/β-Mo₂C was calculated for the samples obtained from the mixtures 20MoAl and 30MoAI from the XRD peak at 2θ = 52.1° of α-Mo₂C, by means of the Scherrer equation. The sample obtained from mixture 20MoAl had an average crystal size of 12.7 nm, whereas the sample obtained from mixture 30MoAI had an average crystal size of 19.0 nm. This was confirmed by TEM analysis, where an average crystal size of 11.9 nm and 18.5 nm was obtained, respectively.

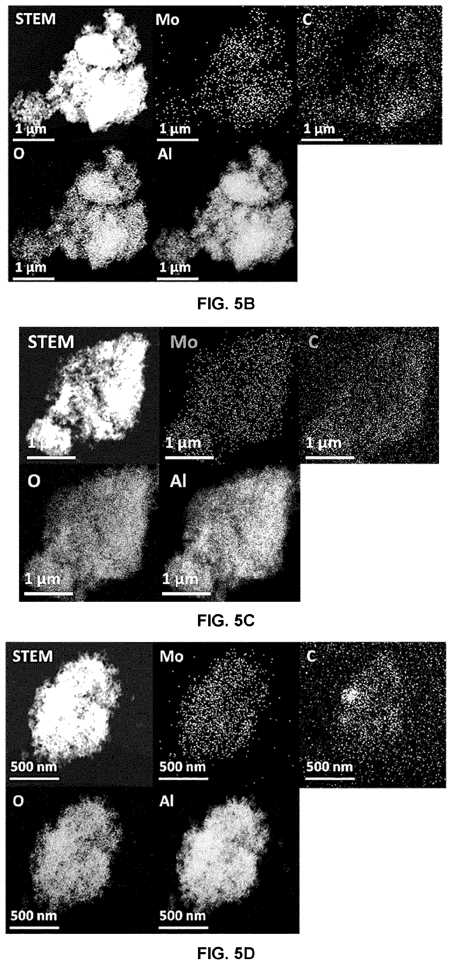

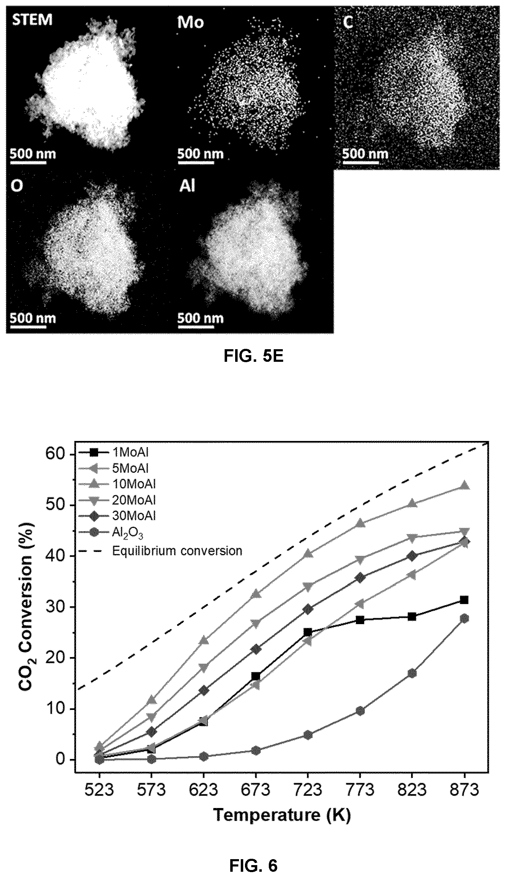

The distribution of the molybdenum along the γ-Al₂O₃ was analysed by means of Scanning Transmission Electron Microscopy and Energy Dispersive X-ray analysis (STEM-EDX). STEM-EDX was performed by means of a JEOL J2010F microscope operated at an accelerating voltage up to 200 kV. Figs. 5A, 5B, 5C, 5D and 5E show the images for the samples obtained from the mixtures 1MoAl, 5MoAl, 10MoAl, 20MoAI, and 30MoAI, respectively. Fig. 5A to Fig. 5E show the images for the elements molybdenum (Mo), carbon (C), oxygen (O) and aluminium (Al), wherein the images for O and Al are related to the porous carrier compound and the images for Mo and C are related to the molybdenum carbide layer. It is clear from Fig. 5A to Fig. 5E that molybdenum and carbon, and thus the molybdenum carbide, are homogeneously distributed over the γ-Al₂O₃ carrier compound.

The pore volume of all samples, including the reference sample, was determined based on both N₂ adsorption/desorption isotherms for the mesoporosity and by means of Hg porosimetry for macro- and mesoporosity in the pore range of 0.01 µm to 100 µm. N₂ adsorption/desorption isotherms were recorded at 77 K using an autosorb iQ2 MP instrument. Prior to the measurement, the samples were outgassed at 200 °C for 16h to remove all adsorbed water. Hg porosimetry was performed using two Thermo-Finnigan porosimeters (Pascal 140 and Porosimeter 2000 for the 4 µm to 100 µm diameter range and the 0.008 µm to 15 µm diameter range, respectively). The measurements were started at vacuum up to 2 bar, followed by measurements from 1 bar to 2000 bar. The results are summarized in Table 2.

The average BET surface area was calculated for all samples, including the reference sample, by multi-point BET analysis of the N₂ adsorption/desorption isotherms. The results are summarized in Table 2.

From Table 2 it is clear that the Mo-comprising samples have a lower BET surface area and a larger pore volume than the reference sample (carburized γ-Al₂O₃). This can be related to the carburization process and the incorporation of the molybdenum carbide particles in the carrier compound. For the molybdenum-comprising samples, it was also noticed that the BET surface area decreased and the pore volume of the micropores increased with an increasing amount of molybdenum. The pore-volume of the meso- and macropores decreased with an increasing amount of molybdenum for the samples obtained from the mixtures 5MoAI to 30MoAl.

**Table 2: average crystal size for cubic δ-MoC and hexagonal η-Mo₃C₂, BET surface area and pore volume of the samples**

| **Mixture name** | **Avg. crystal size (nm)** | **S_{BET} (m²/g)** | **Pore volume - N₂ sorption (cm3/g)** | **Pore volume - Hg porosimetry (cm3/g)** |
|---|---|---|---|---|
| Reference | n.a. | 160 | 0.58 | 0.42 |
| 1MoAl | <1 | 131 | 0.60 | 0.58 |
| 5MoAl | 1.8 | 153 | 0.70 | 0.81 |
| 10MoAl | 2.5 | 147 | 0.68 | 0.78 |
| 20MoAl | 4.6 | 116 | 0.63 | 0.53 |
| 30MoAl | 6.4 | 102 | 0.58 | 0.47 |

### Example 2

The catalytic properties of the catalyst structures of Example 1 were tested. The reference sample (carburized γ-Al₂O₃) was tested as well for comparison reasons. The Reverse Water Gas Shift (RWGS) reaction was performed in a quartz tube fixed bed reactor, having an inner diameter of 1.1 cm, placed in a Carbolite^{®} furnace and connected to the steel tubing with the inlet capillary of a gas chromatograph (Trace 1300 GC), used to analyse the products.

One catalyst structure of Example 1 was tested at a time and was positioned in the centre of the reactor with a thermocouple in direct contact. The catalyst structure was then heated to 250 °C under N₂ flow. Once heated, the catalyst structure was exposed to a reaction mixture having a molar ratio of CO₂/H₂/N₂ of 1/3/3. The total flow of the reaction mixture was 70 ml/min, which represents a Gas Hourly Space Velocity (GHSV) of 4000 h⁻¹. The catalytic behaviour in the RWGS reaction was tested at 0.1 MPa, at a temperature between 250 °C and 600 °C.

Fig. 6 shows the CO₂ conversion for all samples in the temperature range tested. It is clear that all 5 catalyst structures showed catalytic activity and a higher CO₂ conversion than the reference sample. The CO₂ conversion increased with increasing temperature. It was also noticed that the reference sample showed some catalytic activity above 400 °C (673 K), which is believed to come from the way the reference sample is structured.

As can be seen from Fig. 6, the sample obtained from mixture 10MoAI showed the highest CO₂ conversion, reaching 54 % at 600 °C (873 K). This high CO₂ conversion can be attributed to the presence of both cubic δ-MoC and hexagonal η-Mo₃C₂ (as is clear from Fig. 4), with an average crystal size of 2.5 nm (cfr. Table 2).

The inventors have surprisingly noticed that increasing the ratio of the molybdenum content in the mixture to the BET surface area of the porous carrier compound in the mixture to values higher than 6.20 * 10⁻⁶ mol_{Mo}/m² as is the case for the samples obtained from the mixtures 20MoAI and 30MoAI, and in particular values higher than 2.5 * 10⁻⁵ mol_{Mo}/m² as is the case for the sample obtained from mixture 30MoAI, causes the catalytic activity for CO₂ conversion to decrease, contrary to what was expected. It is believed that this decreasing catalytic activity is associated with the formation of α/β-Mo₂C crystals which have a large crystal size (respectively 12.7 and 19 nm - see above) on the one hand, and an increasing average crystal size on the other hand (4.6 nm for 20MoAl and 6.4 nm for 30 MoAl).

At lower ratios of the molybdenum content in the mixture to the BET surface area of the porous carrier compound in the mixture, such as in the samples obtained from the mixtures 10MoAI and 5MoAl, no α/β-Mo₂C could be observed, and also the amount of hexagonal η-Mo₃C₂ was found to decrease. The high catalytic activity of the samples obtained from the mixtures 10 MoAI and 5MoAI is therefore mainly attributed to the presence of cubic δ-MoC and a smaller average crystal size (see Table 2).

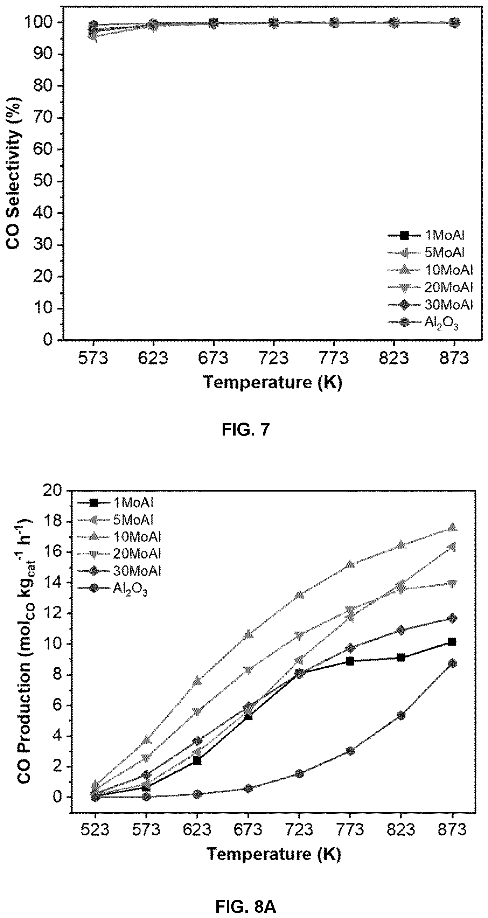

During the RWGS reaction, only CO and CH₄ were formed. Fig. 7 shows the CO selectivity for all samples between 300 °C (573 K) and 600 °C (873 K). All catalyst structures were found to be highly CO selective, reaching values near 100 %.

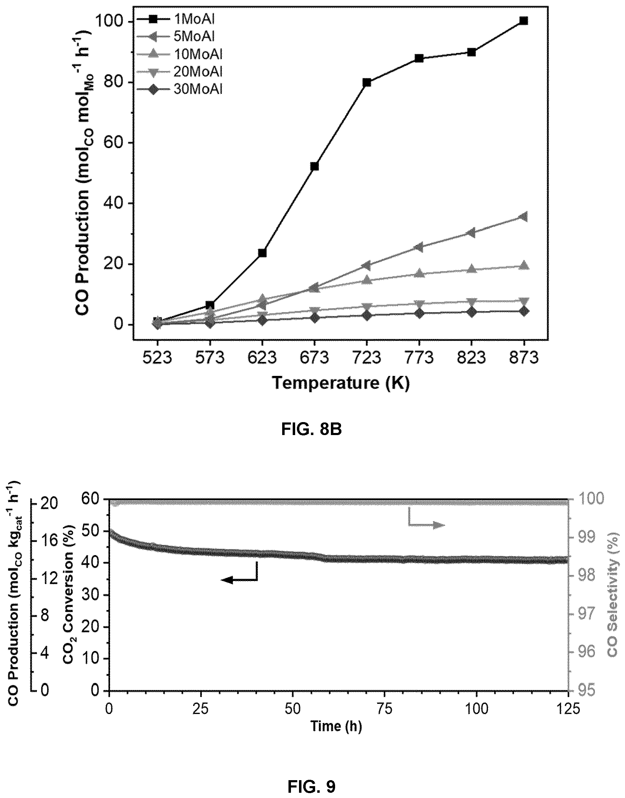

Fig. 8A shows the production of CO, expressed in moles CO per kg catalyst structure and per hour, and Fig. 8B shows the production of CO, expressed in moles CO per mole molybdenum and per hour, for all samples in the temperature range tested. From Fig. 8A it is clear that the sample obtained from mixture 10MoAI showed the highest CO production, reaching 17.6 mol_{CO}/(kg_{cat}*h) at 600°C (873 K). It is further to be noted that also the reference sample seemed to produce some CO at the higher temperatures tested. As is clear from Fig. 8B, the sample obtained from the mixture 1MoAl showed the highest CO production based on the content of molybdenum, i.e. 100.3 mol_{co}/(mol_{Mo}*h) at 600 °C (873 K).

The long-term stability was analysed for the sample obtained from mixture 10MoAI. A long-term catalytic test was performed at 600 °C and at 0.1 MPa, using a reaction mixture having a molar ratio of CO₂/H₂/N₂ of 1/3/3 and at a GHSV of 4000 h⁻¹. The results are presented in Fig. 9. It is clear that a gradual and slight deactivation was observed in the first 60 hours, during which the CO₂ conversion decreased from 50 % at time = 1 hour to 41 % at time = 60 hours. From then on the behaviour remained stable for the next 65 hours. The CO selectivity remained high and steady at almost 100% for the full 5 days.

The apparent activation energy (Eₐ) was determined for the samples obtained from the mixtures 10MoAI and 30MoAl. The apparent activation energy is a measure for the amount of active sites of the catalyst that are functioning as they should. A lower apparent activation energy means more active sites, and thus a higher catalytic activity.

To this end, the RGWS reaction was performed at 0.1 MPa at a temperature between 400 °C and 600 °C, using a reaction mixture having a molar ratio of CO₂/H₂/N₂ of 1/3/3. The total flow of the reaction mixture was 210 ml/min, which represents a GHSV of 12000 h⁻¹. The apparent activation energy of the sample from the 10MoAI mixture was 27 ± 1 kJ/mol, and of the sample from the 30 MoAI mixture it was 22 ± 1 kJ/mol. These values are much lower than values reported in literature for different types of commercially available catalysts, which are typically between 30 kJ/mol and 100 kJ/mol.

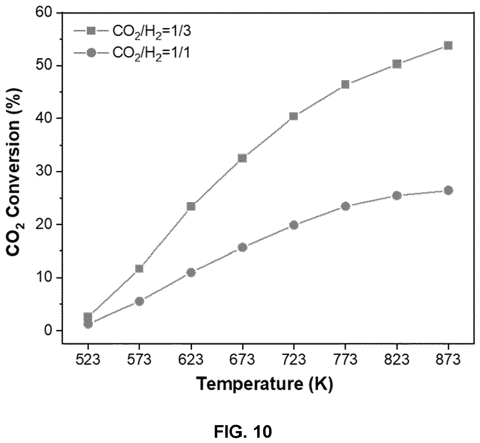

The effect of a different reaction mixture in the RWGS reaction was tested for the sample obtained from mixture 10MoAI. The RWGS reaction as performed for the reaction mixture having a molar ratio of CO₂/H₂/N₂ of 1/3/3 was repeated for a reaction mixture having a molar ratio of CO₂/H₂/N₂ of 1/1/3. The results for the CO₂ conversion are shown in Fig. 10. It is clear that for the molar ratio of 1/1/3 lower CO₂ conversion rates are obtained. This was as expected due to the thermodynamics of the reaction.

During all RWGS reactions performed, no leaching of the molybdenum from the catalyst structure was observed, thereby indicating a good adhesion of the molybdenum carbide crystals to the porous carrier compound.

XRD analysis of the catalyst structures after the RWGS reactions also did not show relevant structural and textural changes, not even after the long-term testing of 5 days.

## Claims

1. Method of producing a catalyst structure comprising molybdenum carbide on a porous carrier compound, comprising the steps of:
- carburizing a mixture comprising a porous carrier compound and a molybdenum oxide by exposing the mixture to a reducing atmosphere at a temperature between 650 °C and 1000 °C, thereby converting at least a portion of the molybdenum oxide into molybdenum carbide and obtaining a catalyst structure having an elevated temperature, and
- cooling the catalyst structure having an elevated temperature in an inert atmosphere, thereby obtaining the catalyst structure,
**characterized in that**:
the reducing atmosphere comprises a carbon-comprising gas, and
the concentration of molybdenum oxide in the mixture is such that a ratio of the molybdenum content in the mixture to the BET surface area of the porous carrier compound in the mixture is equal to or lower than 2.5 * 10⁻⁵ mol_{Mo}/m², wherein the molybdenum content in the mixture is measured by inductively coupled plasma optical emission spectroscopy (ICP-OES) and the BET surface area is measured by multi-point BET analysis of a N₂ adsorption isotherm, such that the carburization temperature and
the concentration of molybdenum oxide in the mixture are such that the molybdenum carbide comprises cubic δ-MoC and/or hexagonal η-Mo₃C₂, as identified by means of the powder diffraction database of the International Center for Diffraction Data (ICDD).

2. Method according to claim 1, wherein the molybdenum oxide comprises one or a combination of MoO₃ and MoO₂, the method further comprising:
- impregnating a porous carrier compound with a precursor of the molybdenum oxide,
- drying the impregnated porous carrier compound, and
- calcining the dried impregnated porous carrier compound, thereby converting the molybdenum oxide precursor into the molybdenum oxide and obtaining the mixture,
preferably wherein the molybdenum oxide precursor comprises one or a combination of (NH₄)₆Mo₇O₂₄.nH₂O, where n is between 0 and 4, X₂MoO₄, wherein X is potassium or sodium, molybdenum chloride, a molybdenum alkoxide or a molybdenum oxalate.

3. Method according to any one of the preceding claims, wherein the molybdenum oxide concentration in the mixture is such that a ratio of the molybdenum content in the mixture to the BET surface area of the porous carrier compound in the mixture is between 5 * 10⁻⁸ mol_{Mo}/m² and 2.5 * 10⁻⁵ mol_{Mo}/m².

4. Method according to any one of the preceding claims, wherein the molybdenum carbide comprises at least 30 % by weight, preferably at least 50 % by weight, of cubic δ-MoC and/or hexagonal η-Mo₃C₂, based on the total weight of molybdenum carbide in the catalyst structure.

5. Method according to any one of the preceding claims, wherein at least 20 %, preferably at least 50 %, of the molybdenum oxide is converted into molybdenum carbide.

6. Method according to any one of the preceding claims, wherein carburization of the mixture is performed at a temperature between 700 °C and 900 °C.

7. Method according to any one of the preceding claims, wherein the carbon-comprising gas comprises one or a combination of a C₁-C₄ alkane and/or CO, preferably wherein the carbon-comprising gas comprises methane.

8. Method according to any one of the preceding claims, wherein the reducing atmosphere comprises hydrogen, and wherein the molar ratio of the carbon-comprising gas and hydrogen is between 100:1 and 1:100, preferably between 10:1 and 1:10.

9. Method according to any one of the preceding claims, wherein the porous carrier compound comprises a metal oxide, a doped metal oxide, a silicate, alumina, silica, or combinations of two or more thereof.

10. Method according to any one of the preceding claims, further comprising shaping the mixture into a porous green body prior to carburizing the mixture.

11. Method according to claim 10, wherein shaping the mixture comprises arranging the mixture as filaments in a plurality of stacked layers to obtain the porous green body, wherein at least some of the filaments within at least one of the plurality of layers are spaced apart from one another, wherein carburizing the mixture comprises carburizing the porous green body.

12. Method according to claim 11, wherein the porous green body is built by a 3D-printing technique.

13. Catalyst structure comprising a porous carrier compound and molybdenum carbide, wherein at least a portion of the molybdenum carbide is present as crystals on the porous carrier compound, **characterized in that** the molybdenum carbide comprises cubic δ-MoC and/or hexagonal η-Mo₃C₂, as identified by means of the powder diffraction database of the ICDD, and **in that** the crystals have an average size of 10 nm or less, preferably 7.5 nm or less, as measured by Transmission Electron Microscopy.

14. Catalyst structure according to claim 13, wherein the molybdenum carbide comprises at least 30 % by weight, preferably at least 50 % by weight, of cubic δ-MoC and/or hexagonal η-Mo₃C₂, based on the total weight of molybdenum carbide.

15. Catalyst structure according to any one of claims 13 to 14, wherein substantially all molybdenum carbide is present as crystals on the porous carrier compound.

16. Catalyst structure according to any one of claims 13 to 15, wherein the porous carrier compound comprises a metal oxide, a doped metal oxide, a silicate, alumina, silica, or combinations of two or more thereof.
